# EUROPEAN PATENT APPLICATION

(11) **EP 1 354 645 A1**
(43) Date of publication of application: **22.10.2003**
(21) Application number: 02710327.4
(22) Date of filing: 23.01.2002
(51) Int. Cl.: B09B 5/00, G06F 17/60

(54) **ENVIRONMENT INFLUENCE ASSESSING METHOD AND ENVIRONMENT INFLUENCE ASSESSING SYSTEM**

(30) Priority: 23.01.2001 JP 2001014451
(71) Applicant: Sony Corporation, Tokyo 141-0001 (JP)
(72) Inventor: OHKI, Hiroshi, Sony Corporation, Tokyo 141-0001 (JP); SATAKE, Kazuki, Sony Corporation, Tokyo 141-0001 (JP)
(74) Representative: Müller, Frithjof E., Dipl.-Ing.
(86) International application number: JP0200450
(87) International publication number: WO02058859

(57) **Abstract**

An environmental influence assessing method for assessing the influence on the environment of a research theme at its R&D stage is provided. It comprises a step of setting environmental aspects possibly having an influence on the environment when research content in the R&D stage is put into practice; a step of setting predetermined assessment indexes for the set environmental aspects (y1 to y8); a step of selecting from the set environmental aspects those which will have an influence on the environment when the research content being an assessment target is put into practice; a step of computing a sum of the assessment indexes set for the selected environmental aspects; and a step of assessing the environmental influence based on a result of the computing.

## Description

### TECHNICAL FIELD

The present invention relates to an environmental influence assessing method and an environmental influence assessing system for carrying out the same, more particularly relates to an environmental influence assessing method for assessing influence on the environment of research content at the research/development (R&D) stage and an environmental influence assessing system for carrying out the same.

### BACKGROUND ART

In recent years, there has been international concern over the destruction of the global environment. The value standards relating to environmental issues have been changing from the conventional value standards of mass production, mass consumption, and mass disposal to the direction of realizing sustainable economic and social development.

In the face of this, industry is being pressed act, as its social responsibility, to reduce the influence and load given to the environment in all areas such as its business activities in general and its goods and services.

Accordingly, investigating and judging what degree of influence something has on the environment from its occurrence to disappearance has been becoming extremely important in clarifying action plans for effectively and efficiently eliminating the degree of influence (load) on the environment. The technology of lifecycle assessment (LCA) for quantitatively assessing the environmental load from the production of a product to its disposal is also being considered.

On the other hand, from the viewpoint of the load on the environment of products mass produced by companies, it is becoming necessary to develop technologies and products taking into consideration the reduction on the load potentially given to the environment (environmental consideration) at the development stage of those products.

Each of these technologies, however, assess what degree of environmental load is given in the lifecycle of a product being an assessment target. No technology is known for assessing influence on the environment before products or technologies for reducing the environmental load are actually provided, that is, when research into the same is being commercialized at the R&D stage of the products or technologies.

The technology may be considered of hypothesizing the parts, production methods, production locations, etc. of a product finally turned out at the time of R&D and assessing the influence by adding up the environmental loads for each of the parts at that time, but at the R&D stage where are many uncertain factors, even if adding up the loads on the environment in this way for assessment, there would be an extremely large number of errors and an extremely long time would end up being taken.

Further, at the time of R&D, it is necessary and sufficient to assess which aspect of the global environment can be contributed to.

### DISCLOSURE OF INVENTION

The present invention was made in consideration of the above problems. Therefore, the present invention has as its object to provide an environmental influence assessing method for assessing the influence of research content on the environment at the R&D stage and an environmental influence assessing system for carrying out the same.

To attain the above object, the environmental influence assessing method of the present invention comprises a step of setting environmental aspects possibly having an influence on the environment when research content is put into practice; a step of setting predetermined assessment indexes for the set environmental aspects; a step of selecting from the set environmental aspects those which will have an influence on the environment when the research content being an assessment target is put into practice; a step of computing a sum of the assessment indexes set for the selected environmental aspects; and a step of assessing the environmental influence based on a result of the computing.

Preferably, the step of setting the assessment indexes sets the indexes in accordance with categories of global environmental issues relating to the environmental aspects.

Preferably, the method further comprises a step of setting weight factors based on degrees of influence given by the research content on the environmental aspects and the step of computing the sum of the assessment indexes computes the sum of the assessment indexes weighting by the weight factors.

Preferably, the step of computing the assessment indexes calculates a sum of the assessment indexes.

For example, the step of setting the assessment indexes forms a matrix of assessment indexes between the environmental aspects and the categories of global environmental issues.

According to the above environmental influence assessing method of the above present invention, by setting environmental aspects possibly having an influence on the environment when research content is put into practice; setting predetermined assessment indexes for the set environmental aspects; selecting from the set environmental aspects those which the research content being an assessment target will have an influence on; computing a sum of the assessment indexes set for the selected environmental aspects; and assessing the environmental influence based on a result of the computing, it is possible to assess the influence on the environment of research content at the R&D stage.

Also, an environmental influence assessing system of the present invention comprises a network; a server storing an environmental influence assessing program recording an environmental influence assessing method setting environmental aspects possibly having an influence on the environment when research content is put into practice, setting predetermined assessment indexes for the set environmental aspects, selecting from the set environmental aspects those which will have an influence on the environment when the research content being an assessment target is put into practice, computing the assessment indexes set for the selected environmental aspects, then assessing the environmental influence based on a result of the computing; and a computer for downloading and executing the environmental influence assessing program from the server via the network.

Preferably, when setting the assessment indexes, the system sets them in accordance with categories of global environmental issues relating to the environmental aspects.

Preferably, the system sets weight factors based on a degree of influence given by the research content on the environmental aspects and, in the step of computing the assessment indexes, computes the assessment indexes weighting by the weight factors.

Preferably, when setting the assessment indexes, the system forms a matrix of the assessment indexes between the environmental aspects and the categories of global environmental issues.

According to the above environmental influence assessing system, it is possible to put the environmental influence assessing method of the present invention into practice easily.

### BRIEF DESCRIPTION OF DRAWINGS

FIG. 1 shows a flowchart for forming a logic system of an environmental influence assessing method according to a first embodiment.
FIG. 2 shows a checksheet of the environmental influence assessing method formed by the flowchart shown in FIG. 1.
FIG. 3 shows a causal relationship between each environment contaminant and environmental influence categories.
FIG. 4 shows a flowchart for explaining a flow of the environmental influence assessing method according to the first embodiment.
FIG. 5 shows a specific example of assessment of the environmental influence of a research theme.
FIG. 6 shows a specific example of assessment of the environmental influence of a research theme.
FIG. 7 shows a checksheet to be used for an environmental influence assessing method according to a second embodiment.
FIG. 8 shows the schematic configuration of an environmental influence assessing system for realizing an environmental influence assessing method of the present invention.
FIG. 9 is a conceptual view for explaining a mode of use of the environmental influence assessing method of the present invention in a network environment.

### BEST MODE FOR CARRYING OUT THE INVENTION

Below, embodiments of an environmental influence assessing method and an environmental influence assessing system of the present invention will be explained with reference to the drawings.

### First Embodiment

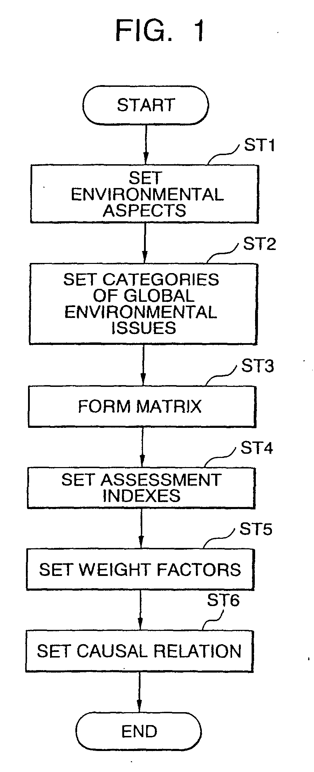

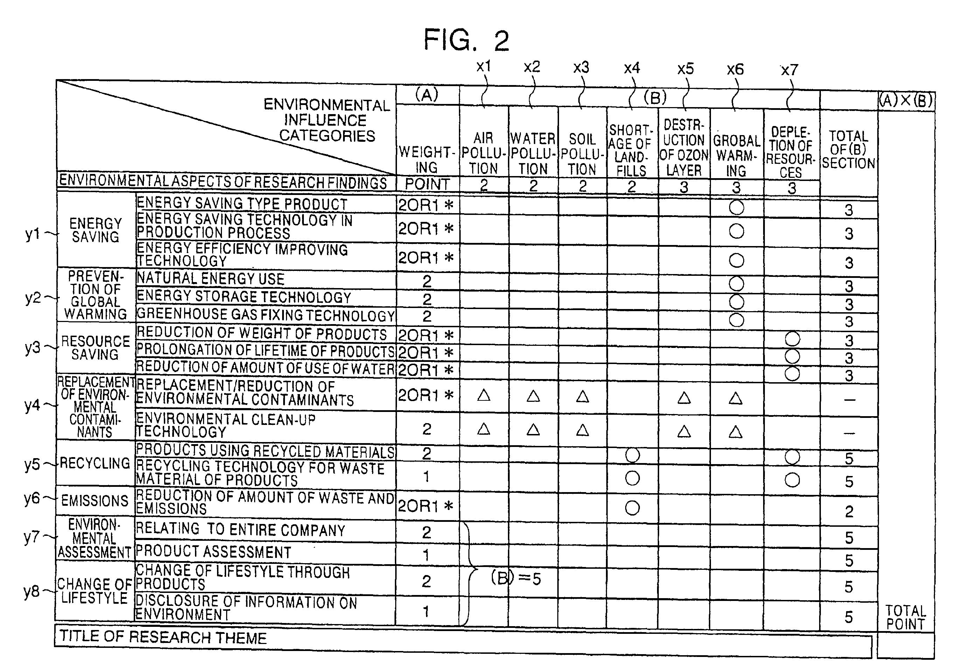

FIG. 1 is a flowchart for forming a logic system of an environmental influence assessing method according to the present embodiment, while FIG. 2 shows a checksheet of the environmental influence assessing method formed from the flowchart shown in FIG. 1.

First, conceivable environmental aspects are set (step ST1).

The environmental aspects list aspects of products or technologies targeted by R&D which can be assessed as having an influence on the environment when the products or technology are commercialized.

FIG. 2 shows an example of the listed environmental aspects (shown along the ordinate). The major items are energy saving y1, prevention of global warming y2, resource saving y3, replacement of environmental contaminants y4, recycling y5, emissions y6, environmental assessment y7, and change of lifestyle y8.

The above items of environmental aspects will be explained in detail.

"Energy saving y1" corresponds to research themes relating to technologies capable of reducing energy consumption. As sub-items, energy saving type products, energy saving technologies in production processes, and energy efficiency improvement technologies are set.

"Energy saving products" corresponds to research themes relating, for example, to products etc. for reducing power consumption etc. compared with conventional products.

"Energy saving technologies of production processes" corresponds to research themes etc. relating to technologies capable of reducing the amount of use of energy used in production processes.

"Energy efficiency improvement technologies" corresponds to research themes etc. relating to technologies for improving power generation efficiency for example in technologies for generating energy.

"Prevention of global warming y2" corresponds to research themes relating to technologies capable of preventing global warming. As sub-items, natural energy use, energy storage technologies, and greenhouse gas fixing technologies are set.

"Natural energy use technologies" corresponds to research themes relating to technologies capable of using for example solar energy etc. and thereby contributing to prevention of global warming.

"Energy storage technologies" corresponds to research themes relating to technologies capable of storing energy and thereby for example reducing the amount of use of nuclear power generation etc. and contributing to prevention of global warming.

"Greenhouse gas fixing technologies" corresponds to research themes relating to technologies capable of fixing the greenhouse gases methane and carbon dioxide without discharging them into the atmosphere and thereby contributing to prevention of global warming.

"Resource saving y3" corresponds to research themes relating to technologies capable of suppressing consumption of global resources. As sub-items, reduction of weight of products, prolongation of lifetime of products, and reduction of the amount of use of water are set.

"Reduction of weight of products" is based on the idea that the greater the total weight of a product, the more resources used at the time of production and corresponds to research themes relating to technologies capable of making a targeted product lighter.

"Prolongation of lifetime of products" is based on the idea that the longer the lifetime compared with a conventional product, the less the amount of use of resources and corresponds to research themes relating to technologies capable of prolonging the lifetime of a targeted product.

"Replacement of environmental contaminants y4" corresponds to research themes relating to technologies capable of replacing environmental contaminants etc. and thereby cleaning the environment. As sub-items, replacement and reduction of environmental contaminants and environmental clean-up technologies.

"Replacement of environmental contaminants" corresponds to research themes relating to technologies capable of replacing environmental contaminants with other substances not polluting the environment and thereby eliminating environmental contaminants from products and processes.

"Reduction of environmental contaminants" corresponds to research themes relating to technologies capable of reducing the amount of use of environmental contaminants in a product and a process even when there are no chemical substances for replacing the environment contaminants.

"Environmental clean-up technologies" corresponds to research themes relating to technologies capable of removing environmental contaminants once dispersed into the environment etc. such as technology for breaking down dioxin and thereby cleaning up the environment.

"Recycling y5" corresponds to research themes relating to recycling of products. As sub-items, products using recycled materials and technologies for recycling waste materials of products are set.

"Products using recycled materials" corresponds to research themes relating to technologies to produce products, for example, by using recycled materials.

"Technologies for recycling waste materials of products" corresponds to research themes relating to technologies capable of processing and enabling recycling of waste materials of products and providing waste materials of products as recycled materials to other companies.

"Emissions y6" includes reduction of waste and emissions as sub-items and corresponds to research themes relating to technologies having such effects.

"Environmental assessment y7" is provided from the viewpoint that some research themes such as lifecycle assessment do not directly provide goods or technologies for reducing the environmental load, but have an effect on designers of goods and thereby indirectly contribute to the environment, so these research themes themselves assess influence on the environment. As sub-items, ones relating to assessment of the global environment by entire companies and ones relating to assessment of individual products are set.

"Change of lifestyle y8" is set from the viewpoint of assessing research themes which indirectly influence the environment in the same way as in the above environmental assessment y7. As sub-items, change of lifestyle through products and disclosure of environmental information are set.

"Change of lifestyles through products" corresponds to research themes relating, for example, to providing goods and educational information having an influence on customer action on the environment through the goods having educational contents.

"Disclosure of environmental information" corresponds to research themes of PR activities and disclosure of information useful for customer action on the environment.

Next, categories of global environmental issues (environmental influence categories) are set (step ST2) and a matrix as shown in FIG. 2 is formed by using the environmental aspects and environmental influence categories set in step ST1 (step ST3).

As the environmental influence categories, ones are set where products or technology targeted by R&D are expected to be capable of contributing to global environmental issues when commercialized.

FIG. 2 shows examples of the environmental influence categories (shown along the abscissa). Air pollution x1, water pollution x2, soil pollution x3, shortage of landfills x4, destruction of the ozone layer x5, global warming x6, and depletion of resources x7 are set.

Next, assessment indexes in the environmental influence categories are set (step ST4).

The assessment indexes for each of the environmental influence categories are determined while reflecting the size of the area of the environmental influence, the size of populace covered, and the environmental policies of companies. 1 to 3 points are set in the present embodiment.

In the present embodiment, two points are given to air pollution x1, water pollution x2, soil pollution x3, and shortage of landfills x4, and three points are given to destruction of the ozone layer x5, global warming x6, and depletion of resources x7.

Note that the above assessment indexes can be changed in accordance with conditions of the global environment.

Next, the environmental aspects are weighted and weight factors are set (step ST5).

In FIG. 2, as an example of setting the weight factors, a two-stage assessment is performed (refer to (A) section). Also, since energy saving y1, resource saving y3, replacement/reduction of environmental contaminants in replacement of environmental contaminants y4, and emissions y6 are all technologies relating to reducing energy, resources, contaminants, etc. from the past, their weight factors can be changed in accordance with the effect of reduction.

In the present embodiment, 2 points are given as weight factor when the effect of reduction is 50% or more comparing with the past, and 1 point is given as the weight factor when less than 50%.

The reasons for weighting environmental aspects in two stages in this way are that a sufficient difference can be given to each research theme when calculating the total assessment points by later calculations even if not providing further stages and that since the assessment is on research themes still in the development stage, there is no need to perform too detailed quantitative assessment and the assessment and calculation are facilitated.

Note that in the present embodiment, 1 or 2 points are set as the weight factors, but the invention is not limited to this. Weight factors having more levels can also be set.

Next, the causal relations between environmental aspects and environmental influence categories are set (step ST6).

As shown in FIG. 2, a circle mark is given in the figure when there is a causal relation between an environmental aspect and environmental influence category.

For example, energy saving y1 and prevention of global warming y2 have a causal relation with global warming x6, resource saving y3 with depletion of resources x7, recycling y5 with the shortage of landfills x4, and depletion of resources x7 and emissions y6 with shortage of landfills x4.

Then, the above assessment indexes are given for each item of the environmental aspects having a causal relation with environmental influence categories.

In the checksheet shown in FIG. 2, the subtotals obtained by adding the assessment indexes of environmental influence categories having causal relations with environmental aspects are shown the "sum total" boxes of (B). For example, for products using recycled materials in recycling y5, the assessment indexes of shortage of landfills x4 (2 points) and depletion of resources x7 (3 points) are added and 5 points is indicated in the sum total box in (B).

By calculating in advance the subtotals obtained by adding assessment indexes of environmental influence categories having a causal relation for the assessment aspects, calculation in later assessment becomes easy.

Regarding the environmental assessment y7 and change of lifestyle y8, it is considered that no causal relation with environmental influence categories can be specified, so 5 points are given uniformly (refer to sum totals in (B)). Note that the points can be changed in accordance with the situation such as the company size.

Also, replacement of environmental contaminants y4 is considered to have a causal relation with air pollution x1, water pollution x2, soil pollution x3, ozone layer depletion x5, and global warming x6, but the environmental influence category differs in accordance with the environmental contaminant (chemical substances), thus triangle marks are given on the checksheet shown in FIG. 2 and the relations defined individually for each substance.

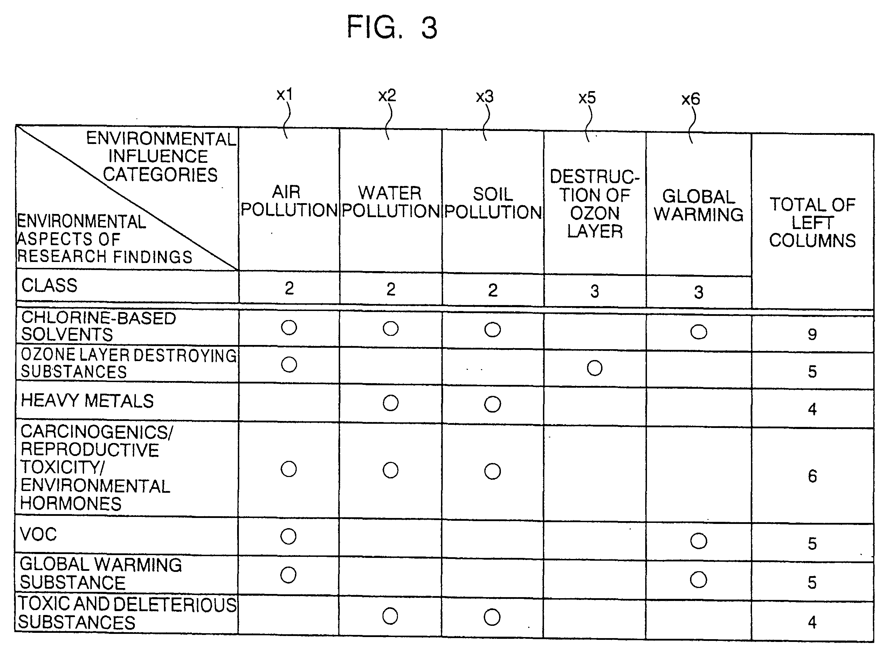

FIG. 3 shows the causal relation with environmental influence categories for different environmental contaminants.

FIG. 3 shows an example of the environmental contaminants. For example, chlorine-based solvents have a causal relation with air pollution x1, water pollution x2, soil pollution x3, and global warming x6, ozone layer destroying substances have a causal relation with air pollution x1 and destruction of the ozone layer x5, and heavy metals have a causal relation with water pollution x2 and soil pollution x3.

Also, for example, carciogenics, reproductive toxicity, environmental hormones, etc. have causal relations with air pollution x1, water pollution x2, and soil pollution x3, volatile organic solvents (VOC) with air pollution x1 and global warming x6, global warming substances with air pollution x1 and global warming x6, and toxic and deleterious substances with water pollution x2 and soil pollution x3.

When an environmental contaminant having a large sum total of the above assessment indexes is reduced, a greater environmental influence assessment is obtained.

The checksheet shown in FIG. 3 also shows subtotals obtained by adding assessment indexes of environmental influence categories having causal relations for every environmental contaminant in the sum total section at the left side of the figure.

Checksheets shown in FIG. 2 and FIG. 3 forming a logic system of an environmental influence assessing method according to the present embodiment are formed by this.

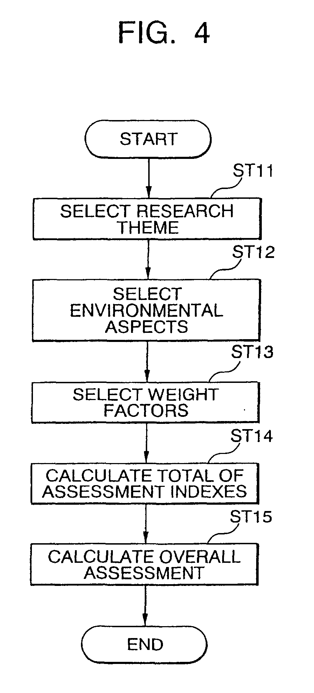

Next, an environmental influence assessing method of a research theme at the R&D stage using the checksheet shown in FIG. 2 will be explained by using a flowchart shown in FIG. 4.

First, as shown at step ST11, a research theme to be an assessment target of the environmental influence assessment is selected.

Next, as shown at step ST12, the influences on the environment when the research theme is commercialized, that is, the environmental aspects are selected.

Namely, an assessor looks only at the (A) section shown in FIG. 2 and extracts environmental aspects which can be expected when the research theme being assessed is commercialized as a product or technology.

Next, as shown at step ST13, when there is a choice in the weight factors of the selected environmental aspects, the degree is assessed and 1 or 2 in the (A) section is selected (circle mark is made).

Next, as shown at step ST14, the sum total of assessment indexes is calculated for each of the selected environmental aspects based on the causal relation with environmental influence categories.

Here, in FIG. 2, the result of calculation of the sum total from the assessment indexes is indicated in the sum total box in (B) based on the causal relation with the environmental influence categories for every environmental aspect. This is sufficient to grasp the same.

Note that when selecting shortage of landfills x4 as an environmental aspect, the sum total of assessment indexes is calculated by using the checksheet shown in FIG. 3. In this case also, the result of calculation of the sum total from the assessment indexes is indicated in the sum total box in (B) for every environmental contaminant. This is sufficient to grasp the same.

Finally, as shown at step ST15, the weight factor of the selected environmental aspect and the sum total of the assessment indexes calculated in the step ST14 are multiplied to obtain the overall assessment.

When there is a plurality of selected environmental aspects, the above multiplication operation is performed for every environmental aspect and the products added to obtain the overall assessment points.

The larger the overall assessment points, the more the research theme is assessed as as contributing to the environment.

The environmental influence of a research theme at its R&D stage can be assessed in this way.

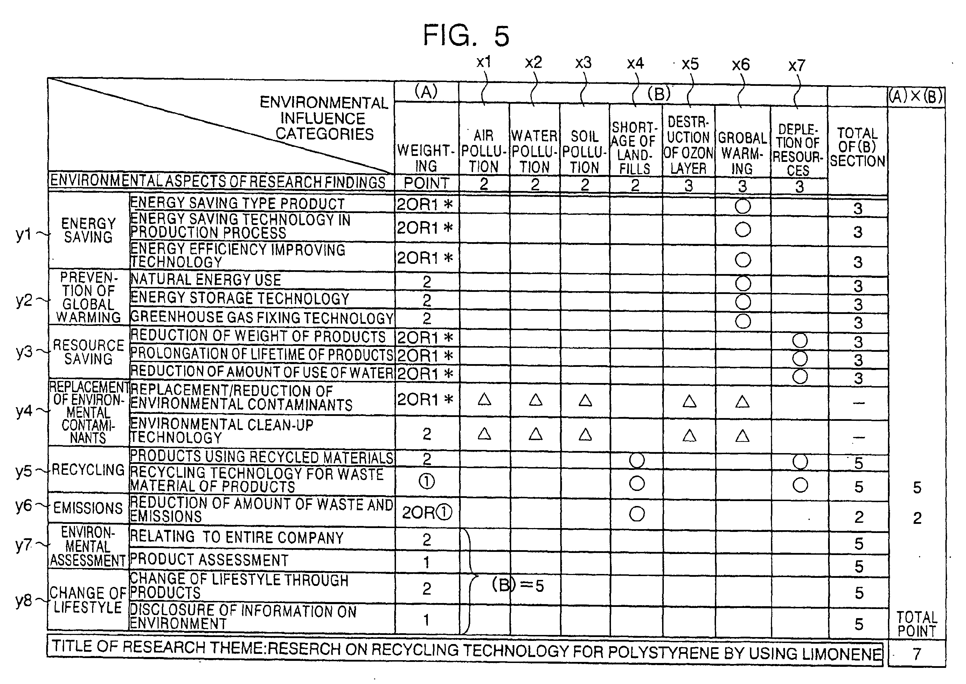

FIG. 5 shows a specific example of using the checksheet in FIG. 2 to assess the environmental influence of for example the research theme "research on recycling technology for polystyrene by using limonene".

Briefly explaining this research theme, limonene dissolves styrene foam (polystyrene) well, so when disposing of styrofoam, it is possible to dissolve the styrofoam by limonene to transport it for disposal and thereby improve the transport efficiency and reduce the amount of waste.

Also, it is possible to dissolving the polystyrene used for in TV cabinets etc. in limonene, separate it from the flame retardant materials etc. of the other components of the cabinets, and recover the polystyrene for recycling.

As shown in FIG. 5, the environmental aspects when the research is commercialized as technology are considered to be the recycling technology for waste materials of products in recycling y5 and reduction of waste in emissions y6, so circle marks are made in the corresponding two boxes in (A) .

Here, the effect of reducing waste is not as great as to exceed 50% comparing with the past, so a circle 1 mark is made.

Then, the weight factors of the selected environmental aspects are multiplied with the sum totals (indicated in (B) section) of assessment indexes calculated from the causal relation of the environmental aspects and the environmental influence categories to calculate the subtotals of the environmental aspects and the subtotals are added so as to obtain 7 points as the overall assessment points.

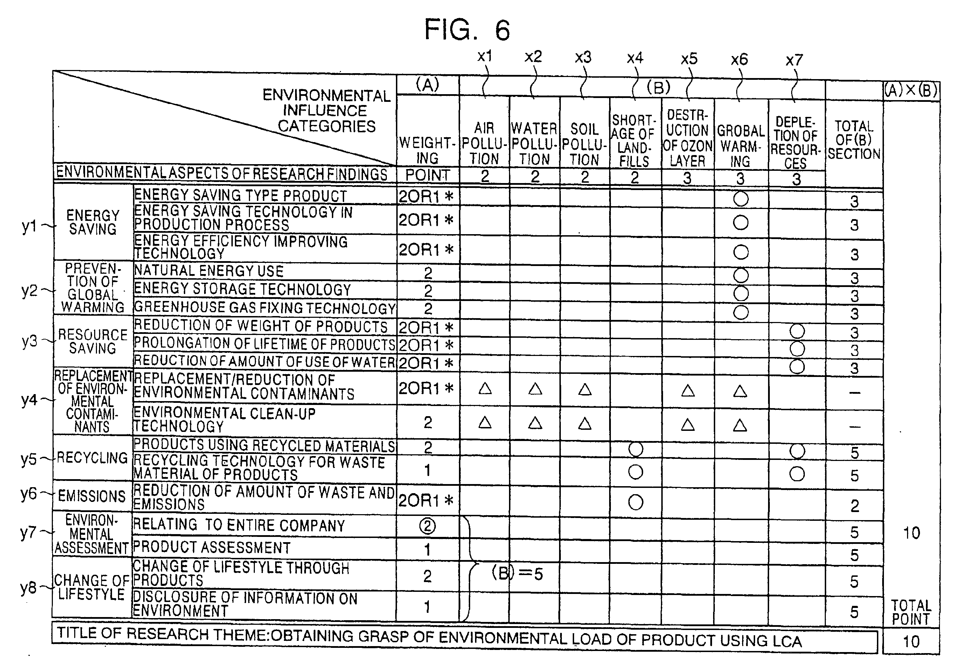

FIG. 6 shows a specific example of using the checksheet in FIG. 2 to assess the environmental influence of for example the research theme "obtaining a grasp of the environmental load of a product using lifecycle assessment (LCA)".

As shown in FIG. 6, the environmental aspect when the research is commercialized as a technique for environmental influence assessment is considered to be the environmental assessment y7, so a circle mark is made in the corresponding location in the (A) section.

Here, the present research theme is deemed to assess the environmental load of a company as a whole by obtaining a grasp on the environmental load of its product, so a circle mark is made in the box relating to the company as a whole.

Then, the weight factor (2 points) of the selected environmental aspect is multiplied with the sum total (indicated in (B) section: 5 points) of the assessment indexes calculated from the causal relation of the environmental aspect and environmental influence categories to obtain 10 points as the overall assessment points.

According to the environmental influence assessing method according to the present embodiment, even without conducting a lifecycle assessment (LCA) adding up the environmental loads of the level of product parts corresponding to research findings, it is possible to obtain an assessment about which environmental aspects the R&D findings would have and how they would influence what categories of global environmental issues easily over sufficiently required range.

As a result, for example, it becomes possible to specify important themes capable of contributing to the environment from among research themes and becomes possible to concentrate funds etc. in research themes with high contributions in terms of the environment to speed up commercialization of those research themes.

### Second Embodiment

In the environmental influence assessing method according to the first embodiment, a matrix was formed by between the environmental aspects and environmental influence categories in the checksheet shown in FIG. 2 forming its. logic system, but in the environmental influence assessing method according to the present embodiment, a checksheet not forming a matrix is used for assessment.

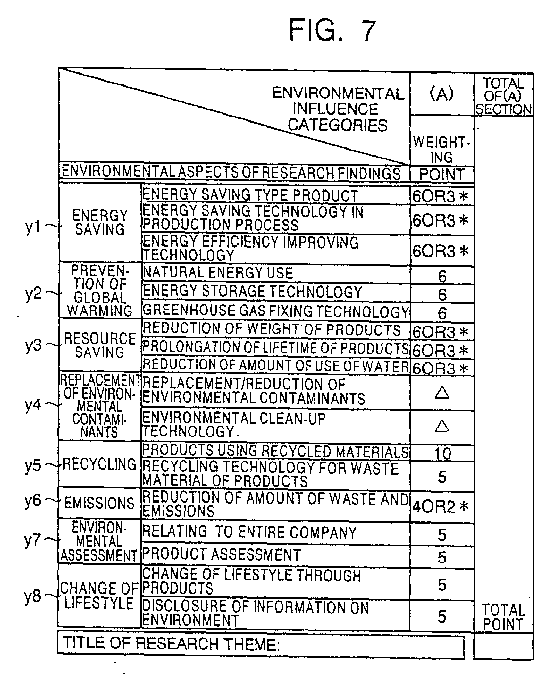

FIG. 7 shows a checksheet used in the environmental influence assessing method according to the present embodiment.

As shown in FIG. 7, in the environmental influence assessing method according to the present embodiment, assessment indexes obtained by multiplying weight factors of the environmental aspects explained in the first embodiment with the sum totals (indicated in (B) in FIG. 2) of assessment indexes calculated from the causal relation of the environmental aspects and the environmental influence categories are set in the weighting boxes of (A).

Namely, in the first embodiment, the checksheet shown in FIG. 2 was prepared for logically explaining the setting of weight factors for environmental aspects and the assessment indexes from the causal relation with environmental influence categories of the environmental aspects, however, when a researcher etc. obtains an environmental influence assessment of a research theme, he only looks at the (A) section for the assessment. Therefore, in the present embodiment, assessment indexes of the environmental aspects are logically set in advance in the same way as in the first embodiment and only overall assessment indexes in the environmental aspects are indicated on the checksheet.

As a result, in FIG. 7, assessment by the assessment indexes is multi-stage assessment.

Note that in the same way as in the first embodiment, assessment indexes can be selected for energy saving y1, resource saving y3, replacement/reduction of environmental contaminants (not shown) of replacement of environmental contaminants y4, and emissions y6 due to the effects of reduction.

Note that for the replacement of environmental contaminants y4, while not illustrated, the assessment indexes can be selected based on the type.

Next, an environmental influence assessing method of a research theme at the R&D stages using the checksheet shown in FIG. 7 will be explained.

Namely, in the same way as step ST11 in the first embodiment, a research theme to be an assessment target of the environmental influence assessment is selected first.

Next, in the same way as step ST12 in the first embodiment, the influence in terms of the environment when the research theme is commercialized, that is, the environmental aspects, are selected.

Namely, an assessor looks only at the (A) section shown in FIG. 2 and extracts environmental aspects which can be expected when the research theme assessed is commercialized as a product or technology.

Next, when there is a choice in the assessment indexes of the selected environmental aspects, the degree is assessed and selection is made (a circle mark is made).

Finally, when there is a plurality of selected environmental aspects, the assessment indexes are added to calculate the overall assessment points.

It is possible to assess the environmental influence of a research theme at its R&D stage in this way.

According to the environmental influence assessing method according to the present embodiment, the same effects as in the first embodiment can be obtained.

### Third Embodiment

In the environmental influence assessing method according to the present embodiment, the environmental influence assessing methods according to the first and second embodiments are realized by an environmental influence assessing apparatus using a recording medium.

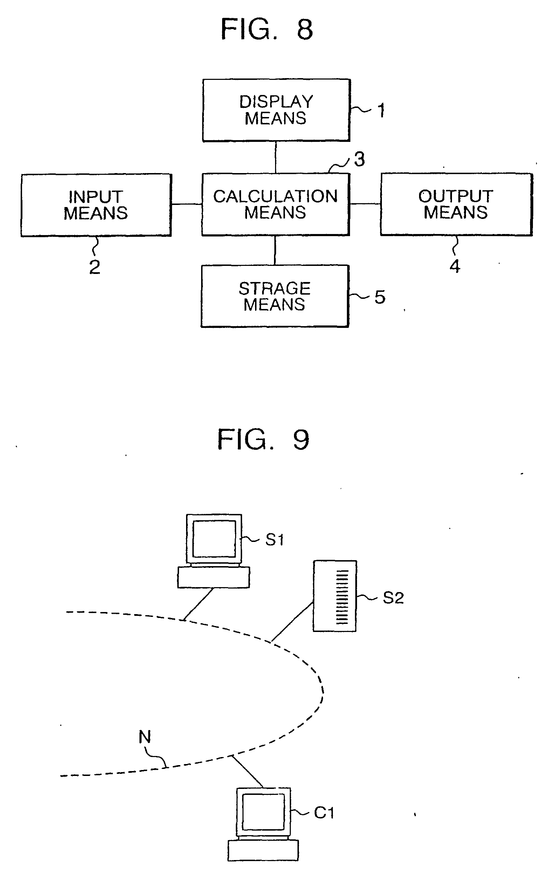

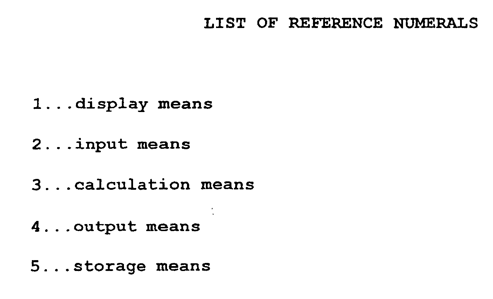

FIG. 8 is a view of the schematic configuration of an environmental influence assessing system according to the present embodiment for realizing environmental influence assessing methods.

Namely, the environmental influence assessing system is composed mainly of a personal computer, workstation, or other computer. It is comprised of a display, that is, a display means 1, an input means 2 comprised of a keyboard, mouse, etc., a calculation means 3 for calculating overall assessment points for assessment, an output means 4 for outputting computation results, and a storage means 5 for storing items of environmental aspects and items of environmental influence categories etc.

To realize the above environmental influence assessing methods by the environmental influence assessing system as such, an environmental influence assessing program programmed with the steps in the environmental influence assessing method as a routine (program) is executed.

The environmental influence assessing program is stored in the storage means 5, read into a not shown main memory, and executed by a not shown CPU at the time of execution. As the storage means 5, a variety of storage devices can be used such as hard disk, floppy disk, and other magnetic storage devices, CD-ROM and other read-only memories, and a magnetooptical disk.

Also, as shown in FIG. 9, it can be realized even in an environment using public telephone lines, a LAN, the Internet, and other networks N. Namely, it may be configured by providing only the display means 1 and the input means 2 of the environmental influence assessing apparatus at a computer C1 on the client side and providing the calculation means 3 and the storage means 5 at a computer S1 on the server side connected via the network.

It may be also configured to download and execute the environmental influence assessing program stored in a server S2 into a computer C1 on the client side via the network N.

By executing the environmental influence assessing program by using the environmental influence assessing system comprised by the above modes of use, it is possible to easily assess the environmental influence of a research theme at the R&D stage without building a complex system.

Next, a specific example of the execution of an environmental influence assessing program using the above environmental influence assessing system will be explained.

First, when the environmental influence assessing program is executed, a display of a table form as shown in FIG. 2 is output.

The environmental aspects and their weight factors and the environmental influence categories and their assessment indexes are prepared in advance as a database common for all research themes.

Then, processing for prompting inputting of a research theme to be assessed is executed. A user inputs a research theme to be assessed by using the input means 2.

Then, the user selects the influence in terms of the environment when the research theme is commercialized, that is, the environmental aspects.

Namely, an assessor looks only at the (A) section shown in FIG. 2 indicated on the display means 1 and selects environmental aspects which can be expected when the research theme assessed is commercialized as a product or technology by clicking by a mouse etc. used as the input means 2. When there is a choice in weight factors in the selected environmental aspects, the degree is assessed and this is further selected.

Due to this, the sum total of assessment indexes in the environmental influence categories having a causal relation with the selected environmental aspects is calculated by the calculation means 3.

Note that when selecting replacement of environmental contaminants y4 as the environmental aspect, the checksheet shown in FIG. 3 is displayed on the display means 1. By selecting the chemical substances shown in FIG. 3, the sum total of assessment indexes of environmental influence categories having a causal relation is calculated by the calculation means 3 for each of the selected chemical substances.

Furthermore, the weight factors of the selected environmental aspects and the sum totals of the assessment indexes are multiplied by the calculation means 3 and the result displayed in the overall point section.

When there are a plurality of selected environmental aspects, the above multiplication operation is performed for each of the environmental aspects and the products added to obtain the overall assessment points.

The environmental influence of a research theme at the R&D stages can be assessed in this way.

According to the above environmental influence assessing method according to the present embodiment, the user can automatically obtain an environmental influence assessment of a research theme by just selecting the environmental aspects of the research theme.

Also, by sharing data of the overall assessment points for the environmental influence of research themes via the network N, for example, environmental influence assessments conducted for individual research themes can be assembled by every department, every place of business, or every company, so environmental influence assessments can be performed at various scales.

Also, the same effects as in the first and second embodiments can be obtained.

The environmental influence assessing method and the environmental influence assessing system of the present invention are not limited to the above explanations of the embodiments.

For example, a variety of modifications can be made on contents of the items of the environmental aspects, contents of the items of the environmental influence categories, settings of the weight factors, and settings of the assessment indexes.

Other various modifications can be made within the scope of the present invention.

### INDUSTRIAL APPLICABILITY

According to the environmental influence assessing method and the environmental influence assessing system of the present invention, it is possible to obtain an environmental influence assessing of research content at the R&D stage easily over a sufficiently required range.

As a result, for example, it becomes possible to specify research content capable of contributing to the environment among research contents and possible to concentrate funds etc. in research content high in degree of contribution in terms of the environment so as to speed up commercialization of that research content.

## Claims

1. An environmental influence assessing method comprising:
a step of setting environmental aspects possibly having an influence on the environment when research content is put into practice;
a step of setting predetermined assessment indexes for the set environmental aspects;
a step of selecting from the set environmental aspects those which will have an influence on the environment when the research content being an assessment target is put into practice;
a step of computing the assessment indexes set for the selected environmental aspects; and
a step of assessing the environmental influence based on a result of the computing.

2. An environmental influence assessing method as set forth in claim 1, wherein the step of setting the assessment indexes sets the indexes in accordance with categories of global environmental issues relating to the environmental aspects.

3. An environmental influence assessing method as set forth in claim 1,
further comprising a step of setting weight factors based on degrees of influence given by the research content on the environmental aspects and wherein the step of computing the assessment indexes computes the assessment indexes weighting by the weight factors.

4. An environmental influence assessing method as set forth in claim 1, wherein the step of computing the assessment indexes calculates a sum of the assessment indexes.

5. An environmental influence assessing method as set forth in claim 2, wherein the step of setting the assessment indexes forms a matrix of assessment indexes between the environmental aspects and the categories of global environmental issues.

6. An environmental influence assessing system comprising:
a network;
a server storing an environmental influence assessing program recording an environmental influence assessing method setting environmental aspects possibly having an influence on the environment when research content is put into practice, setting predetermined assessment indexes for the set environmental aspects, selecting from the set environmental aspects those which will have an influence on the environment when the research content being an assessment target is put into practice, computing the assessment indexes set for the selected environmental aspects, then assessing the environmental influence based on a result of the computing; and
a computer for downloading and executing the environmental influence assessing program from the server via the network.

7. An environmental influence assessing system as set forth in claim 6, wherein, when setting the assessment indexes, the system sets them in accordance with categories of global environmental issues relating to the environmental aspects.

8. An environmental influence assessing system as set forth in claim 6, wherein the system sets weight factors based on a degree of influence given by the research content on the environmental aspects and, in the step of computing the assessment indexes, computes the assessment indexes weighting by the weight factors.

9. An environmental influence assessing system as set forth in claim 6, wherein, when setting the assessment indexes, the system forms a matrix of the assessment indexes between the environmental aspects and the categories of global environmental issues.

## Amended claims

### Amended claims under Art. 19.1 PCT

**1.** (Amended) An environmental influence assessing method comprising:
a step of setting environmental aspects possibly having an influence on the environment when research content is put into practice;
a step of setting predetermined assessment indexes for the set environmental aspects;
a step of selecting from the set environmental aspects those which will have an influence on the environment when the research content being an assessment target is put into practice;
a step of setting weight factors based on degrees of influence given by the research content on the environmental aspects;
a step of computing the set assessment indexes set for the selected environmental aspects weighting by the weight factors; and
a step of assessing environmental influence based on a result of the computing.

**2.** An environmental influence assessing method as set forth in claim 1, wherein the step of setting the assessment indexes sets the indexes in accordance with categories of global environmental issues relating to the environmental aspects.

**3.** (Canceled)

**4.** An environmental influence assessing method as set forth in claim 1, wherein the step of computing the assessment indexes calculates a sum of the assessment indexes.

**5.** An environmental influence assessing method as set forth in claim 2, wherein the step of setting the assessment indexes forms a matrix of assessment indexes between the environmental aspects and the categories of global environmental issues.

**6.** An environmental influence assessing system comprising:
a network;
a server storing an environmental influence assessing program recording an environmental influence assessing method setting environmental aspects possibly having an influence on the environment when research content is put into practice, setting predetermined assessment indexes for the set environmental aspects, selecting from the set environmental aspects those which will have an influence on the environment when the research content being an assessment target is put into practice, computing the assessment indexes set for the selected environmental aspects, then assessing the environmental influence based on a result of the computing; and
a computer for downloading and executing the environmental influence assessing program from the server via the network.

**7.** An environmental influence assessing system as set forth in claim 6, wherein, when setting the assessment indexes, the system sets them in accordance with categories of global environmental issues relating to the environmental aspects.

**8.** An environmental influence assessing system as set forth in claim 6, wherein the system sets weight factors based on a degree of influence given by the research content on the environmental aspects and, in the step of computing the assessment indexes, computes the assessment indexes weighting by the weight factors.

**9.** An environmental influence assessing system as set forth in claim 6, wherein, when setting the assessment indexes, the system forms a matrix of the assessment indexes between the environmental aspects and the categories of global environmental issues.
